# FASCICULE DE BREVET EUROPEEN

(11) **EP 4 172 392 B1**
(45) Date de publication et mention de la délivrance du brevet: **26.06.2024**
(21) Numéro de dépôt: 21737722.5
(22) Date de dépôt: 15.06.2021
(51) Int. Cl.: D03D 1/00, D03D 3/00, D03D 11/00, D03D 15/267, D03D 15/275, D03D 15/43, D03D 15/47, D03D 15/573, D03D 25/00, B29B 11/16, B29C 70/24, F01D 21/04, F02C 7/04, F01D 25/24

(54) **TEXTURE FIBREUSE POUR CARTER EN MATERIAU COMPOSITE AVEC TORONS DE CHAINE HYBRIDES**
FASERTEXTUR FÜR EINE HÜLLE AUS VERBUNDMATERIAL MIT HYBRIDEN KETTENSTRÄNGEN
FIBROUS TEXTURE FOR A CASING MADE OF COMPOSITE MATERIAL WITH HYBRID WARP STRANDS

(30) Priorité: 26.06.2020 FR 2006718
(43) Date de publication de la demande: 03.05.2023
(73) Titulaire: SAFRAN AIRCRAFT ENGINES, 75015 Paris (FR)
(72) Inventeur: LEBLON, Baptiste, 77550 MOISSY-CRAMAYEL (FR); ARNOLD, Clémentine, 77550 MOISSY-CRAMAYEL (FR); BOUROLLEAU, Clément, 77550 MOISSY-CRAMAYEL (FR); DUPAYS, Thomas, 77550 MOISSY-CRAMAYEL (FR); DOMINGUES, Serge, 77550 MOISSY-CRAMAYEL (FR)
(74) Mandataire: Cabinet Beau de Loménie
(86) Numéro de dépôt international: PCT/FR2021/051065
(87) Numéro de publication internationale: WO 2021/260291

(56) Documents cités:
- FR-A1- 3 070 402
- FR-A1- 3 084 088
- FR-A1- 3 084 089
- JP-A- 2005 179 829

## Description

### Domaine Technique

L'invention concerne les carters de turbine à gaz, et plus particulièrement, mais non exclusivement, les carters de soufflante de turbine à gaz pour moteurs aéronautiques.

### Technique antérieure

Dans un moteur aéronautique à turbine à gaz, le carter de soufflante remplit plusieurs fonctions. Il définit la veine d'entrée d'air dans le moteur, supporte un matériau abradable en regard des sommets d'aubes de la soufflante, supporte une structure éventuelle d'absorption d'ondes sonores pour le traitement acoustique en entrée du moteur et incorpore un bouclier de rétention. Le bouclier de rétention constitue un piège à débris retenant les débris, tels que des objets ingérés ou des fragments d'aubes endommagées, projetés par centrifugation, afin d'éviter qu'ils traversent le carter et atteignent d'autres parties de l'aéronef.

Précédemment réalisés en matériau métallique, les carters, comme le carter de soufflante, sont maintenant réalisés en matériau composite, c'est-à-dire à partir d'une préforme fibreuse densifiée par une matrice organique, ce qui permet de réaliser des pièces ayant une masse globale moins élevée que ces mêmes pièces lorsqu'elles sont réalisées en matériau métallique tout en présentant une résistance mécanique au moins équivalente sinon supérieure.

La fabrication d'un carter de soufflante en matériau composite à matrice organique est notamment décrite dans le document US 2013/082417. Dans le carter divulgué dans le document US 2013/082417, le bouclier de rétention est constitué par une portion de surépaisseur obtenue au niveau du renfort fibreux du carter qui présente une épaisseur évolutive. Le renfort fibreux est obtenu par enroulement d'une texture fibreuse tissée 3D dans laquelle une augmentation progressive d'épaisseur est obtenue en changeant la taille des torons ou fils de chaîne.

Avec cette technique de fabrication, une fois l'agencement et la nature des torons définis, c'est la quantité de fibres qui détermine la capacité de rétention du carter. Toutefois, ce troisième facteur a un impact direct sur la masse et le coût du carter Une texture fibreuse et un procédé selon les préambules des revendications 1 et 8 sont décrits dans FR 3 084 089 A1.

Or, il existe un besoin pour un carter en matériau composite ayant une bonne capacité de rétention tout en présentant une masse globale et un coût de fabrication maîtrisés.

### Exposé de l'invention

A cet effet, l'invention propose une texture fibreuse présentant une forme de bande s'étendant dans une direction longitudinale sur une longueur déterminée entre une partie proximale et une partie distale et dans une direction latérale sur une largeur déterminée entre un premier bord latéral et un deuxième bord latéral, la texture fibreuse présentant un tissage tridimensionnel ou multicouche entre une pluralité de couches de torons de chaîne s'étendant dans la direction longitudinale et une pluralité de couches de torons de trame s'étendant dans la direction latérale, la texture fibreuse comprenant des première et deuxième portions longitudinales s'étendant chacune sur la longueur déterminée de la texture fibreuse suivant la direction longitudinale et sur une largeur à partir du premier ou deuxième bord latéral inférieure à la largeur déterminée de la texture fibreuse suivant la direction latérale, les première et deuxième portions longitudinales comprenant chacune des torons de chaîne et des torons de trame constitués de fibres de carbone, la texture fibreuse comprenant en outre une portion intermédiaire présente entre les première et deuxième portions, caractérisée en ce qu'au moins une partie des torons de chaîne présents dans la portion intermédiaire sont des torons de chaîne hybrides constitués à la fois de filaments de fibres de carbone et de filaments de fibres de verre.

L'hybridation de certains torons de chaîne avec des filaments en fibres de verre permet d'améliorer la résistance du carter à l'impact, par exemple avec une aube détachée. En effet, les filaments en fibres de verre présentent une résistance au cisaillement et à l'allongement en traction bien supérieure à celle présentée par les filaments en fibres de carbone. Ainsi, la texture fibreuse selon l'invention comprend des torons de chaîne hybrides dans la portion destinée à former la zone ou bouclier de rétention du carter afin de conférer une plus grande résistance au cisaillement à cette portion.

En outre, le coût d'approvisionnement des fibres de verre étant bien inférieur au coût d'approvisionnement des fibres de carbone, l'insertion de filaments en fibres de verre dans des torons de chaîne permet de diminuer le coût de fabrication de la texture fibreuse et, par conséquent, du carter final sans impact sur une fonction importante du carter, à savoir la rétention.

Selon une caractéristique particulière de la texture fibreuse de l'invention, la portion intermédiaire comprend des torons de chaîne hybrides ayant une taille supérieure à la taille des torons de chaîne présents dans les première et deuxième portions longitudinales.

Selon une autre caractéristique particulière de la texture fibreuse de l'invention, les torons de chaîne hybrides comprennent entre 10% et 90% de filaments de fibres de verre.

L'invention concerne également, une préforme fibreuse de carter aéronautique comprenant un enroulement sur plusieurs tours d'une texture fibreuse selon l'invention, la portion intermédiaire de la texture fibreuse formant une préforme de zone de rétention.

L'invention concerne encore un carter de turbine à gaz en un matériau composite, comprenant un renfort fibreux constitué d'une préforme fibreuse selon l'invention, et une matrice densifiant le renfort fibreux. Le carter peut notamment être un carter de soufflante de turbine à gaz.

L'invention concerne encore un moteur aéronautique à turbine à gaz ayant un carter selon l'invention.

L'invention a également pour objet un procédé de fabrication d'une texture fibreuse par tissage tridimensionnel ou multicouche entre une pluralité de couches de torons de chaîne s'étendant dans une direction longitudinale et une pluralité de couches de torons de trame s'étendant dans la direction latérale, la structure fibreuse présentant une forme de bande s'étendant dans la direction longitudinale sur une longueur déterminée entre une partie proximale et une partie distale et dans la direction latérale sur une largeur déterminée entre un premier bord latéral et un deuxième bord latéral, le procédé comprenant le tissage de première et deuxième portions longitudinales s'étendant chacune sur la longueur déterminée de la texture fibreuse suivant la direction longitudinale et sur une largeur à partir du premier ou deuxième bord latéral inférieure à la largeur déterminée de la texture fibreuse suivant la direction latérale, les première et deuxième portions longitudinales comprenant chacune des torons de chaîne et des torons de trame constitués de fibres de carbone, le procédé comprenant en outre le tissage d'une portion intermédiaire présente entre les première et deuxième portions longitudinales, caractérisé en ce qu'au moins une partie des torons de chaîne présents dans la portion intermédiaire sont des torons de chaîne hybrides constitués à la fois de filaments de fibres de carbone et de filaments de fibres de verre.

Selon une caractéristique particulière du procédé de l'invention, la portion intermédiaire comprend des torons de chaîne hybrides ayant une taille supérieure à la taille des torons de chaîne présents dans les première et deuxième portions longitudinales.

Selon une autre caractéristique particulière du procédé de l'invention, les torons de chaîne hybrides comprennent entre 10% et 90% de filaments de fibres de verre.

### Brève description des dessins

[Fig. 1] La figure 1 est une vue schématique en perspective d'un métier à tisser montrant le tissage tridimensionnel d'une texture fibreuse,
[Fig. 2] La figure 2 est une vue schématique en perspective d'une texture fibreuse conformément à un mode de réalisation de l'invention,
[Fig. 3] La figure 3 est une coupe latérale de la texture fibreuse de la figure 2 et montrant un plan d'armure de tissage,
[Fig. 4] La figure 4 est une en coupe montrant la section d'un toron de chaîne 100% carbone,
[Fig. 5] La figure 5 est une vue en coupe montrant la section d'un toron de chaîne hybride,
[Fig. 6] La figure 6 une vue schématique en perspective montrant l'enroulement d'une texture fibreuse sur un outillage de mise en forme,
[Fig. 7] La figure 7 est une demi-vue en coupe axiale d'une préforme de carter obtenue par enroulement d'une texture fibreuse comme montré sur la figure 6,
[Fig. 8] La figure 8 est une vue en coupe montrant le positionnement de secteurs d'injection sur la préforme du carter de la figure 5,
[Fig. 9] La figure 9 est une vue en perspective d'un moteur aéronautique conformément à un mode de réalisation de l'invention.

### Description des modes de réalisation

L'invention s'applique d'une manière générale à tout carter en matériau composite à matrice organique de turbine à gaz.

L'invention sera décrite ci-après dans le cadre de son application à un carter de soufflante de moteur aéronautique à turbine à gaz.

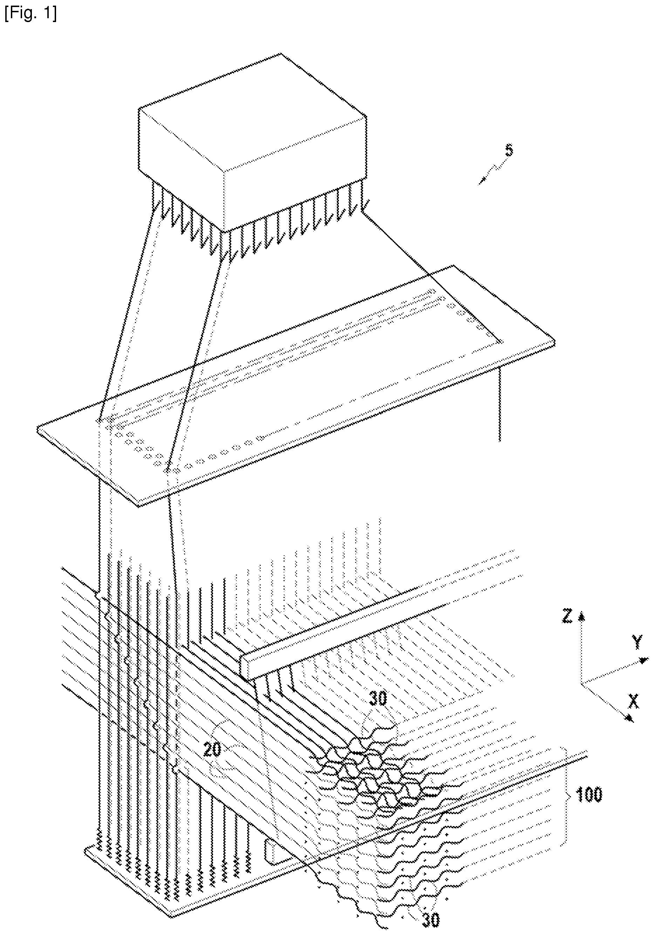

Le procédé de fabrication d'un carter en matériau composite selon l'invention débute, comme représentée sur la figure 1, par la réalisation d'une texture fibreuse 100 par tissage au moyen d'un métier à tisser de type jacquard 5 sur lequel on a disposé un faisceau de torons ou fils de chaîne 20 et 40 en une pluralité de couches, les fils de chaîne étant liés par des torons ou fils de trame 30.

La texture fibreuse est réalisée par tissage tridimensionnel. Par « tissage tridimensionnel » ou « tissage 3D », on entend ici un mode de tissage par lequel certains au moins des fils de trame lient des fils de chaîne sur plusieurs couches de fils de chaîne ou inversement. La texture fibreuse peut présenter une armure de tissage interlock. Par tissage « interlock », on entend ici une armure de tissage dans laquelle chaque couche de fils de trame lie plusieurs couches de fils de chaîne, avec tous les fils d'une même colonne de trame ayant le même mouvement dans le plan de l'armure. D'autres armures de tissage sont envisageables. Les fils utilisés peuvent être notamment des fils en fibres de carbone, de verre ou de carbure de silicium.

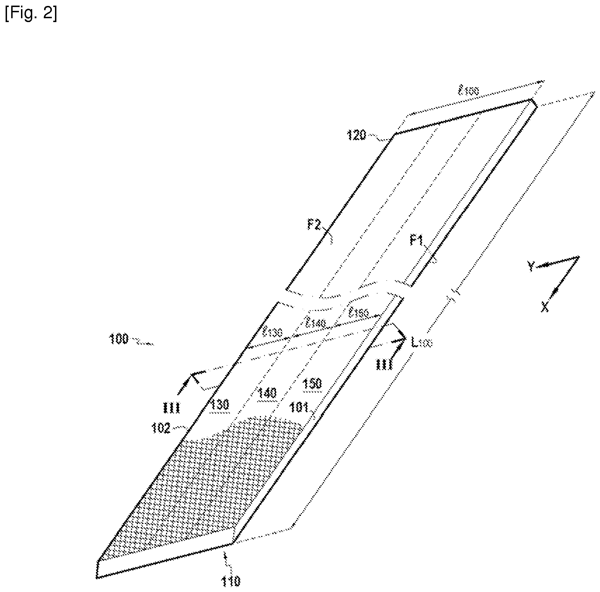

Comme illustrée sur la figure 2, la texture fibreuse 100 présente une forme de bande qui s'étend en longueur dans une direction longitudinale X correspondant à la direction de défilement des torons de chaîne 20 et 40 et en largeur ou transversalement dans une direction latérale Y entre des premier et deuxième bords latéraux 101 et 102, la direction latérale Y correspondant à la direction des torons de trame 30. La texture fibreuse s'étend longitudinalement sur une longueur déterminée L₁₀₀ dans la direction X entre une partie proximale 110 destinée à former le début de l'enroulement d'une préforme fibreuse sur un outillage de mise en forme et une partie distale 120 destinée à former la fin de l'enroulement de la préforme fibreuse.

La texture fibreuse présente en outre une portion intermédiaire 140 s'étendant sur une largeur déterminée l₁₄₀ dans la direction Y, la portion intermédiaire 140 étant destinée à former le fût ou la virole du carter. La portion intermédiaire 140 est destinée à être présente en regard des aubes et définit la zone ou bouclier de rétention du carter à obtenir. La portion intermédiaire 140 est située en retrait des premier 101 et deuxième 102 bords latéraux et s'étend sur une largeur déterminée I₁₄₀ inférieure à la largeur l₁₀₀ de la texture 100. La portion intermédiaire 140 est délimitée entre deux portions longitudinales 130 et 150 s'étendant chacune sur une largeur déterminée, respectivement l₁₃₀ et l₁₅₀, dans la direction Y et sur la longueur L₁₀₀ de la texture 100. La première portion longitudinale 130 s'étend entre le premier bord latéral 101 et la portion intermédiaire 140. La deuxième portion longitudinale 150 s'étend entre le deuxième bord latéral 102 et la portion intermédiaire 140. Chacune des portions longitudinales 130 et 150 est destinée au moins en partie à former une bride annulaire du carter.

La longueur L₁₀₀ de la texture fibreuse 100 est déterminée en fonction de la circonférence de l'outillage ou du moule de mise en forme de manière à permettre la réalisation d'un nombre de tours déterminé de la texture fibreuse, par exemple quatre tours.

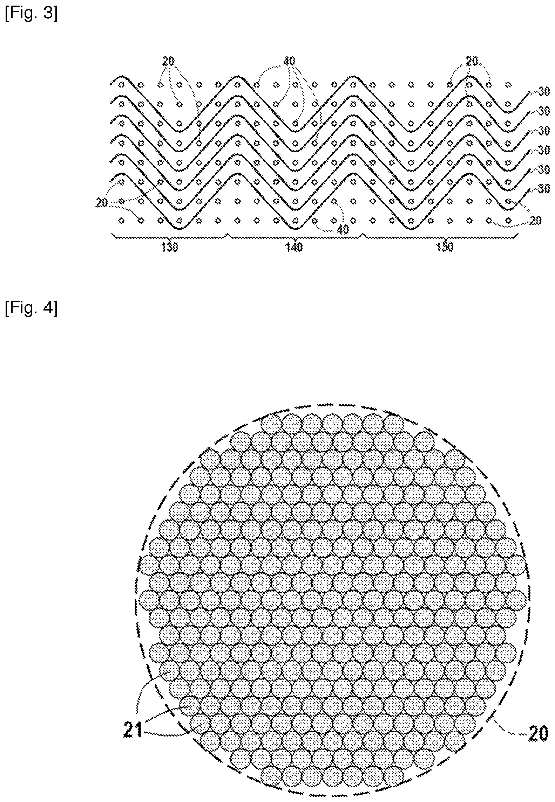

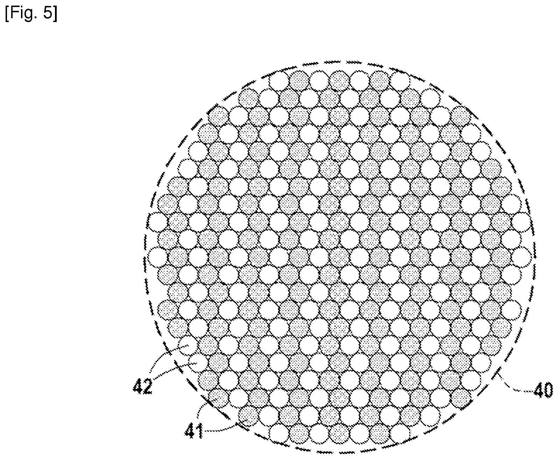

Conformément à l'invention, la portion intermédiaire 140 de la texture fibreuse comporte des torons de chaîne hybrides 40 constitués à la fois de filaments de fibres de carbone et de filaments de fibres de verre tandis que les torons de chaîne 20 présents dans portions longitudinales 130 et 150 et les torons de trame 30 sont constitués uniquement avec des filaments de de fibres de carbone. Plus précisément, comme illustrés sur la figure 4, les torons ou fils de chaîne 20 sont constitués d'une pluralité de filaments 21 en fibres de carbone. Comme illustrés sur la figure 5, les fils ou torons de chaîne hybrides 40 sont constitués à la fois de filaments 41 en fibres de carbone et de filaments 42 en fibres de verre.

Les torons de chaîne ou fils de chaîne sont chacun constitués de plusieurs centaines ou milliers de de filaments, eux-mêmes chacun constitués de fibres en carbone ou en verre.

Les torons de chaîne hybride 40 comprennent entre 10% et 90% de filament de fibres de verre 41. A titre d'exemple, un toron de chaîne hybride ayant un titre de 24k (24 000 filaments) comprenant 50% de filaments en fibres de verre contiendra 12 000 filaments en fibres de carbone te 12 000 filaments en fibres de carbone. Le titre ou titrage d'un fil correspond à la grosseur de celui-ci (selon le type de matière du fil, la densité varie, donc le volume occupé pour une même masse sera différent) et peut être défini de plusieurs façons. Il peut être notamment défini par la masse linéique du fil (masse par unité de longueur) qui s'exprime généralement en tex correspondant à la masse en grammes de 1000 mètres de fil ou en décitex (dtx) correspondant à la masse (en grammes) de 10000 mètres de fil. Le titre d'un fil peut être également défini par le nombre de filaments qui le compose. Dans ce cas, le titre du fil s'exprime en « K » qui correspond au nombre en millier de filaments par fil. Par exemple, un fil de 1K comprend 1000 filaments.

De manière connue, un toron peut être réalisé par filage d'une pluralité de filaments d'un précurseur liquide et par regroupement des filaments en toron. Avant le regroupement des filaments, on procède généralement à un ensimage qui consiste à déposer sur les filaments un agent de liaison assurant la cohésion des filaments entre eux et facilitant les manipulations ultérieures du toron. Les torons de chaîne hybride peuvent être formés par regroupement d'une quantité déterminée de filaments en fibres de carbone et d'une quantité déterminée de filaments en fibres de verre, les filaments étant distribués de manière aléatoire dans le toron. Selon une variante de réalisation, les torons de chaîne hybride peuvent être formés par regroupement de plusieurs ensembles de filaments déjà formés en « sous-torons », c'est-à-dire des torons ayant un titre inférieur et multiple du titre du toron hybride à réaliser. A titre d'exemple non limitatif, un toron hybride ayant un titre de 48k (48 000 filaments) peut être obtenu en regroupant deux torons de carbone ayant un titre de 12k (soit deux fois 12 000 filaments en fibres de carbone) avec deux torons de verre ayant un titre de 12k (soit 12 000 filaments en fibres de verre). Les filaments dans leur ensemble ou déjà regroupés en sous-torons peuvent être torsadés lors de la formation du toron hybride.

La figure 3 illustre un exemple de plan d'armure de la texture fibreuse de la figure 2 qui comprend 8 couches de torons de chaîne 20 ou 40 et 6 couches de torons de trame 30. Chaque couche de torons de trame lie trois couches de torons de chaîne. Dans l'exemple décrit ici, les torons de chaîne de deux couches de chaîne voisines sont alignés sur des mêmes colonnes. On pourrait aussi adopter une disposition en quinconce, les couches torons de chaîne étant réparties en demi-colonnes disposées en quinconce. Des armures de tissage de type interlock utilisables sont décrites dans le document WO 2006/136755.

Les portions longitudinales 130 et 150 sont tissées avec des torons de chaîne 20 et des torons de trame 30 en filaments de fibres de carbone tandis que la portion intermédiaire est tissée avec des torons de chaîne hybrides 40, à savoir regroupant chacun des filaments à la fois en fibres de carbone et de verre, et les torons de trame 30 en filaments de fibres de carbone.

Dans l'exemple décrit ici, les torons de chaîne hybrides 40 présents dans la portion intermédiaire 140 ont une titre supérieur au titre des torons de chaîne 20 présents dans les première et deuxième portions longitudinales 130, 150. Cela permet de créer une surépaisseur dans la texture fibreuse 100 et dans le carter final au niveau de la zone de rétention. Toutefois, suivant une variante de réalisation, les torons de chaîne hybrides peuvent avoir le même titre que les torons de chaîne présents dans les portions longitudinales. Suivant encore une variante de réalisation, une partie des torons de chaîne hybrides peuvent avoir le même titre que les torons de chaîne présents dans les portions longitudinales tandis qu'une autre partie des torons de chaîne hybrides ont un titre supérieur à celui des torons de chaîne présents dans les portions longitudinales.

Toujours dans l'exemple décrit ici, la portion intermédiaire 140 comprend uniquement des torons de chaîne hybrides. Selon une variante de réalisation, la portion intermédiaire peut comprendre à la fois des torons de chaîne hybrides et des torons de chaîne constitués entièrement de filaments de fibres de carbone. A titre d'exemple non limitatif, seules certaines couches de la pluralité couches de de chaîne présentes du côté d'une face interne de la texture fibreuse sont constituées de torons hybrides, les autres couches de la pluralité couches de torons de chaîne étant constituées de torons de filaments en fibres de carbone. Il peut s'agir par exemple des quatre premières couches à partir de la face interne F1 de la texture fibreuse 100 tandis que les autres couches de fils ou torons de trame situées du côté de la face externe F2 de la texture fibreuse sont constituées seulement de torons de filaments en fibres de carbone.

On vient de décrire un exemple dans lequel la texture fibreuse a une armure de tissage interlock à 8 couches de chaîne et 6 couches de trame. On ne sort toutefois pas du cadre de l'invention lorsque le nombre de couches de trame et de chaine est différent, ou lorsque la texture fibreuse présente une armure de tissage différente d'une armure interlock.

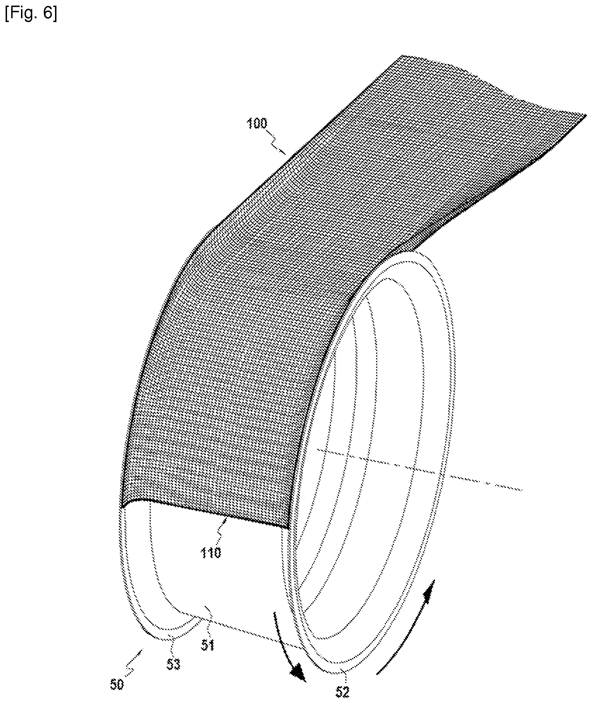

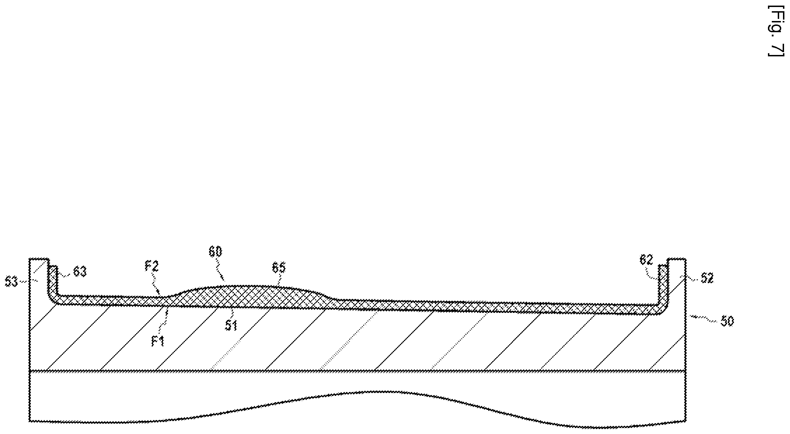

Comme illustré sur la figure 6, un renfort fibreux de carter est formé par enroulement sur un mandrin 50 de la texture fibreuse 100 décrite précédemment, le renfort fibreux constituant une préforme fibreuse tubulaire complète d'un carter formant une seule pièce. A cet effet, le mandrin 50 présente une surface externe 51 dont le profil correspond à la surface interne du carter à réaliser. Le mandrin 50 comporte également deux flasques 52 et 53 pour former des parties de préforme fibreuse 62 et 63 correspondant aux brides du carter (les brides 62 et 63 sont visibles à la figure 7).

La figure 7 montre une vue en coupe de la préforme fibreuse 60 obtenue après enroulement de la texture fibreuse 100 en plusieurs couches sur le mandrin 50. Le nombre de couches ou spires est fonction de l'épaisseur désirée et de l'épaisseur de la texture fibreuse. Il est de préférence au moins égal à 2. Dans l'exemple décrit ici, la préforme 60 comprend 4 couches de texture fibreuse 100. La préforme fibreuse comporte ici une surépaisseur 65 correspondant à la portion intermédiaire 140 enroulée sur plusieurs tours et destinée à former la zone ou bouclier de rétention du carter.

On procède ensuite à la densification de la préforme fibreuse 60 par une matrice.

La densification de la préforme fibreuse consiste à combler la porosité de la préforme, dans tout ou partie du volume de celle-ci, par le matériau constitutif de la matrice.

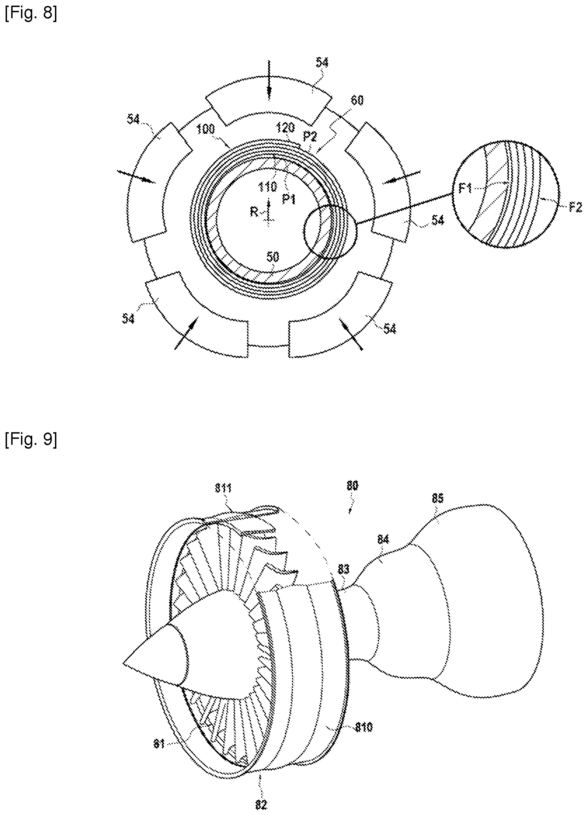

La matrice peut être obtenue de façon connue en soi suivant le procédé par voie liquide. Le procédé par voie liquide consiste à imprégner la préforme par une composition liquide contenant un précurseur organique du matériau de la matrice. Le précurseur organique se présente habituellement sous forme d'un polymère, tel qu'une résine, éventuellement dilué dans un solvant. La préforme fibreuse est placée dans un moule pouvant être fermé de manière étanche avec un logement ayant la forme de la pièce finale moulée. Comme illustré sur la figure 8, la préforme fibreuse 60 est ici placée entre une pluralité de secteurs 54 formant contre-moule et le mandrin 50 formant support, ces éléments présentant respectivement la forme extérieure et la forme intérieure du carter à réaliser. Ensuite, on injecte le précurseur liquide de matrice, par exemple une résine, dans tout le logement pour imprégner la préforme.

La transformation du précurseur en matrice organique, à savoir sa polymérisation, est réalisée par traitement thermique, généralement par chauffage du moule, après élimination du solvant éventuel et réticulation du polymère, la préforme étant toujours maintenue dans le moule ayant une forme correspondant à celle de la pièce à réaliser. La matrice organique peut être notamment obtenue à partir de résines époxydes, telle que, par exemple, la résine époxyde à hautes performances vendue, ou de précurseurs liquides de matrices carbone ou céramique.

Dans le cas de la formation d'une matrice carbone ou céramique, le traitement thermique consiste à pyrolyser le précurseur organique pour transformer la matrice organique en une matrice carbone ou céramique selon le précurseur utilisé et les conditions de pyrolyse. A titre d'exemple, des précurseurs liquides de carbone peuvent être des résines à taux de coke relativement élevé, telles que des résines phénoliques, tandis que des précurseurs liquides de céramique, notamment de SiC, peuvent être des résines de type polycarbosilane (PCS) ou polytitanocarbosilane (PTCS) ou polysilazane (PSZ). Plusieurs cycles consécutifs, depuis l'imprégnation jusqu'au traitement thermique, peuvent être réalisés pour parvenir au degré de densification souhaité.

La densification de la préforme fibreuse peut être réalisée par le procédé bien connu de moulage par transfert dit RTM (« Resin Transfert Moulding »). Conformément au procédé RTM, on place la préforme fibreuse dans un moule présentant la forme du carter à réaliser. Une résine thermodurcissable est injectée dans l'espace interne délimité entre la pièce en matériau rigide et le moule et qui comprend la préforme fibreuse. Un gradient de pression est généralement établi dans cet espace interne entre l'endroit où est injecté la résine et les orifices d'évacuation de cette dernière afin de contrôler et d'optimiser l'imprégnation de la préforme par la résine.

La résine utilisée peut être, par exemple, une résine époxyde. Les résines adaptées pour les procédés RTM sont bien connues. Elles présentent de préférence une faible viscosité pour faciliter leur injection dans les fibres. Le choix de la classe de température et/ou la nature chimique de la résine est déterminé en fonction des sollicitations thermomécaniques auxquelles doit être soumise la pièce. Une fois la résine injectée dans tout le renfort, on procède à sa polymérisation par traitement thermique conformément au procédé RTM.

Après l'injection et la polymérisation, la pièce est démoulée. La pièce est finalement détourée pour enlever l'excès de résine et les chanfreins sont usinés pour obtenir un carter 810 présentant une forme de révolution comme illustré sur la figure 9.

Le carter 810 représenté sur la figure 9 est un carter d'une soufflante de moteur aéronautique à turbine à gaz 80. Un tel moteur, comme montré très schématiquement par la figure 9 comprend, de l'amont vers l'aval dans le sens de l'écoulement de flux gazeux, une soufflante 81 disposée en entrée du moteur, un compresseur 82, une chambre de combustion 83, une turbine haute-pression 84 et une turbine basse pression 85. Le moteur est logé à l'intérieur d'un carter comprenant plusieurs parties correspondant à différents éléments du moteur. Ainsi, la soufflante 81 est entourée par le carter 810. Le carter 810 comprend une zone ou bouclier de rétention 811 correspondant à la surépaisseur de la préforme fibreuse 60 et comprenant les torons de chaîne hybride décrit précédemment.

Grâce à la présence de torons de chaîne hybrides incorporant des filaments en fibres de verre dans la zone de rétention du carter, on limite la profondeur de pénétration d'un projectile, par exemple une aube ou partie d'aube, impactant la surface interne du carter. On préserve ainsi une partie plus importante du matériau du carter, ce qui permet d'assurer efficacement la gestion de la déformation du carter et la restitution de l'énergie emmagasinée dans le carter liée au fragment de l'aube perdue lors d'un évènement de perte d'aube ou fraction d'aube.

En utilisant des torons hybrides, il est possible de réaliser deux fonctions différentes. En effet, les filaments en fibres de carbone confèrent une raideur nécessaire à la fonction mécanique demandée au carter tandis que les filaments en fibres de verre confèrent une grande résistance au cisaillement pour la fonction d'absorption en cisaillement demandée au carter durant l'impact avec une aube ou un fragment de celle-ci.

## Revendications

1. Texture fibreuse (100) présentant une forme de bande s'étendant dans une direction longitudinale (X) sur une longueur déterminée (L₁₀₀) entre une partie proximale (110) et une partie distale (120) et dans une direction latérale (Y) sur une largeur déterminée (l₁₀₀) entre un premier bord latéral (101) et un deuxième bord latéral (102), la texture fibreuse présentant un tissage tridimensionnel ou multicouche entre une pluralité de couches de torons de chaîne (20, 40) s'étendant dans la direction longitudinale et une pluralité de couches de torons de trame (30) s'étendant dans la direction latérale, la texture fibreuse (100) comprenant des première et deuxième portions longitudinales (130, 150) s'étendant chacune sur la longueur déterminée de la texture fibreuse suivant la direction longitudinale (X) et sur une largeur à partir du premier ou deuxième bord latéral (101, 102) inférieure à la largeur déterminée de la texture fibreuse suivant la direction latérale (Y), les première et deuxième portions longitudinales (130, 150) comprenant chacune des torons de chaîne (20) et des torons de trame (30) constitués de fibres de carbone, la texture fibreuse comprenant en outre une portion intermédiaire (140) présente entre les première et deuxième portions (130, 150), **caractérisée en ce qu'**au moins une partie des torons de chaîne présents dans la portion intermédiaire sont des torons de chaîne hybrides (40) constitués à la fois de filaments de fibres de carbone (41) et de filaments de fibres de verre (42).

2. Texture fibreuse selon la revendication 1, dans laquelle la portion intermédiaire (140) comprend des torons de chaîne hybrides (40) ayant une taille supérieure à la taille des torons de chaîne (20) présents dans les première et deuxième portions longitudinales (130, 150).

3. Texture fibreuse selon la revendication 1 ou 2, dans laquelle les torons de chaîne hybrides (40) comprennent entre 10% et 90% de filaments de fibres de verre (41).

4. Préforme fibreuse (60) de carter aéronautique (810) comprenant un enroulement sur plusieurs tours d'une texture fibreuse (100) selon l'une quelconque des revendications 1 à 3, la portion intermédiaire (140) de la texture fibreuse formant une préforme de zone de rétention.

5. Carter (810) de turbine à gaz en un matériau composite, comprenant un renfort fibreux constitué d'une préforme fibreuse (60) selon la revendication 4, et une matrice densifiant le renfort fibreux.

6. Carter (810) selon la revendication 5, dans lequel ledit carter est un carter de soufflante de turbine à gaz.

7. Moteur aéronautique à turbine à gaz (80) ayant un carter (810) selon la revendication 5 ou 6.

8. Procédé de fabrication d'une texture fibreuse (100) par tissage tridimensionnel ou multicouche entre une pluralité de couches de torons de chaîne (20, 40) s'étendant dans une direction longitudinale (X) et une pluralité de couches de torons de trame (30) s'étendant dans la direction latérale (Y), la structure fibreuse présentant une forme de bande s'étendant dans la direction longitudinale (X) sur une longueur déterminée (L₁₀₀) entre une partie proximale (110) et une partie distale (120) et dans la direction latérale (Y) sur une largeur déterminée (l₁₀₀) entre un premier bord latéral (101) et un deuxième bord latéral (102), le procédé comprenant le tissage de première et deuxième portions longitudinales (130, 150) s'étendant chacune sur la longueur déterminée de la texture fibreuse suivant la direction longitudinale (X) et sur une largeur à partir du premier ou deuxième bord latéral (101, 102) inférieure à la largeur déterminée de la texture fibreuse suivant la direction latérale (Y), les première et deuxième portions longitudinales (130, 150) comprenant chacune des torons de chaîne (20) et des torons de trame (30) constitués de fibres de carbone, le procédé comprenant en outre le tissage d'une portion intermédiaire (140) présente entre les première et deuxième portions longitudinales (130, 150), **caractérisé en ce qu'**au moins une partie des torons de chaîne présents dans la portion intermédiaire sont des torons de chaîne hybrides (40) constitués à la fois de filaments de fibres de carbone (41) et de filaments de fibres de verre (42).

9. Procédé selon la revendication 8, dans lequel la portion intermédiaire (140) comprend des torons de chaîne hybrides (40) ayant une taille supérieure à la taille des torons de chaîne (20) présents dans les première et deuxième portions longitudinales (130, 150).

10. Procédé selon la revendication 8 ou 9, dans lequel les torons de chaîne hybrides (40) comprennent entre 10% et 90% de filaments de fibres de verre (41).

## Patentansprüche

1. Fasertextur (100), die eine Streifenform aufweist, die sich in einer Längsrichtung (X) über eine bestimmte Länge (L₁₀₀) zwischen einem proximalen Teil (110) und einem distalen Teil (120) und in einer seitlichen Richtung (Y) über eine bestimmte Breite (l₁₀₀) zwischen einem ersten Seitenrand (101) und einem zweiten Seitenrand (102) erstreckt, wobei die Fasertextur eine dreidimensionale oder mehrschichtige Verwebung zwischen mehreren Schichten von Kettlitzen (20, 40), die sich in der Längsrichtung erstrecken, und mehreren Schichten von Schusslitzen (30) aufweist, die sich in der seitlichen Richtung erstrecken, wobei die Fasertextur (100) erste und zweite Längsabschnitte (130, 150) umfasst, die sich jeweils über die bestimmte Länge der Fasertextur der Längsrichtung (X) folgend und über eine Breite ausgehend von dem ersten oder zweiten Seitenrand (101, 102), die geringer ist als die bestimmte Breite der Fasertextur, der seitlichen Richtung (Y) folgend erstrecken, wobei der erste und zweite Längsabschnitt (130, 150) jeweils Kettlitzen (20) und Schusslitzen (30) umfassen, die aus Kohlenstofffasern bestehen, wobei die Fasertextur ferner einen Zwischenabschnitt (140) umfasst, der zwischen dem ersten und zweiten Abschnitt (130, 150) vorliegt, **dadurch gekennzeichnet, dass** zumindest ein Teil der Kettlitzen, die in dem Zwischenabschnitt vorliegen, hybride Kettlitzen (40) sind, die sowohl aus Filamenten aus Kohlenstofffasern (41) als auch aus Filamenten aus Glasfasern (42) bestehen.

2. Fasertextur nach Anspruch 1, wobei der Zwischenabschnitt (140) hybride Kettlitzen (40) umfasst, die eine größere Größe als die Größe der Kettlitzen (20) aufweisen, die in dem ersten und zweiten Längsabschnitt (130, 150) vorliegen.

3. Fasertextur nach Anspruch 1 oder 2, wobei die hybriden Kettlitzen (40) zwischen 10 % und 90 % Filamente aus Glasfasern (41) umfassen.

4. Faservorform (60) eines Luftfahrzeug-Gehäuses (810), umfassend eine Wickelstruktur aus mehreren Wicklungen einer Fasertextur (100) nach einem der Ansprüche 1 bis 3, wobei der Zwischenabschnitt (140) der Fasertextur eine Vorform der Rückhaltezone bildet.

5. Gehäuse (810) einer Gasturbine aus einem Verbundmaterial, umfassend eine Faserverstärkung, die aus einer Faservorform (60) nach Anspruch 4 besteht, und eine Matrix, welche die Faserverstärkung verdichtet.

6. Gehäuse (810) nach Anspruch 5, wobei das Gehäuse ein Gebläsegehäuse einer Gasturbine ist.

7. Gasturbinen-Luftfahrzeugmotor (80), der ein Gehäuse (810) nach Anspruch 5 oder 6 aufweist.

8. Verfahren zur Herstellung einer Fasertextur (100) durch dreidimensionale oder mehrschichtige Verwebung zwischen mehreren Schichten von Kettlitzen (20, 40), die sich in einer Längsrichtung (X) erstrecken, und mehreren Schichten von Schusslitzen (30), die sich in der seitlichen Richtung (Y) erstrecken, wobei die Fasertextur eine Streifenform aufweist, die sich in der Längsrichtung (X) über eine bestimmte Länge (L₁₀₀) zwischen einem proximalen Teil (110) und einem distalen Teil (120) und in der seitlichen Richtung (Y) über eine bestimmte Breite (l₁₀₀) zwischen einem ersten Seitenrand (101) und einem zweiten Seitenrand (102) erstreckt, wobei das Verfahren die Verwebung von ersten und zweiten Längsabschnitten (130, 150) umfasst, die sich jeweils über die bestimmte Länge der Fasertextur der Längsrichtung (X) folgend und über eine Breite ausgehend von dem ersten und zweiten Seitenrand (101, 102), die geringer ist als die bestimmte Breite der Fasertextur, der seitlichen Richtung (Y) folgend erstrecken, wobei der erste und zweite Längsabschnitt (130, 150) jeweils Kettlitzen (20) und Schusslitzen (30) umfassen, die aus Kohlenstofffasern bestehen, wobei das Verfahren ferner die Verwebung eines Zwischenabschnitts (140) umfasst, der zwischen dem ersten und zweiten Längsabschnitt (130, 150) vorliegt, **dadurch gekennzeichnet, dass** zumindest ein Teil der Kettlitzen , die in dem Zwischenabschnitt vorliegen, hybride Kettlitzen (40) sind, die sowohl aus Filamenten aus Kohlenstofffasern (41) als auch aus Filamenten aus Glasfasern (42) bestehen.

9. Verfahren nach Anspruch 8, wobei der Zwischenabschnitt (140) hybride Kettlitzen (40) umfasst, die eine größere Größe als die Größe der Kettlitzen (20) aufweisen, die in dem ersten und zweiten Längsabschnitt (130, 150) vorliegen.

10. Verfahren nach Anspruch 8 oder 9, wobei die hybriden Kettlitzen (40) zwischen 10 % und 90 % Filamente aus Glasfasern (41) umfassen.

## Claims

1. A fibrous texture (100) having the shape of a strip extending in a longitudinal direction (X) over a determined length (L₁₀₀) between a proximal portion (110) and a distal portion (120) and in a lateral direction (Y) over a determined width (l₁₀₀) between a first lateral edge (101) and a second lateral edge (102), the fibrous texture having a three-dimensional or multi-layer weaving between a plurality of layers of warp strands (20, 40) extending in the longitudinal direction and a plurality of layers of weft strands (30) extending in the lateral direction, the fibrous texture (100) comprising first and second longitudinal sections (130, 150) each extending over the determined length of the fibrous texture along the longitudinal direction (X) and over a width from the first or second lateral edge (101, 102) smaller than the determined width of the fibrous texture along the lateral direction (Y), the first and second longitudinal sections (130, 150) each comprising warp strands (20) and weft strands (30) constituted by carbon fibers, the fibrous texture further comprising an intermediate section (140) present between the first and second sections (130, 150), **characterized in that** at least a portion of the warp strands present in the intermediate section are hybrid warp strands (40) constituted by both carbon fiber filaments (41) and glass fibers filaments (42).

2. The fibrous texture according to claim 1, wherein the intermediate section (140) comprises hybrid warp strands (40) having a size greater than the size of the warp strands (20) present in the first and second longitudinal sections (130, 150).

3. The fibrous texture according to claim 1 or 2, wherein the hybrid warp strands (40) comprise between 10% and 90% of glass fiber filaments (41).

4. The fibrous preform (60) for an aeronautical casing (810) comprising a winding over several turns of a fiber texture (100) according to any one of claims 1 to 3, the intermediate section (140) of the fiber texture forming a retention area preform.

5. A gas turbine casing (810) made of composite material, comprising a fibrous reinforcement constituted by a fibrous preform (60) according to claim 4, and a matrix densifying the fibrous reinforcement.

6. The casing (810) according to claim 5, wherein said casing is a gas turbine fan casing.

7. An aeronautical gas turbine engine (80) having a casing (810) according to claim 5 or 6.

8. A method for manufacturing a fibrous texture (100) by three-dimensional or multi-layer weaving between a plurality of layers of warp strands (20, 40) extending in a longitudinal direction (X) and a plurality of layers of weft strands (30) extending in the lateral direction (Y), the fibrous structure having the shape of a strip extending in the longitudinal direction (X) over a determined length (L₁₀₀) between a proximal portion (110) and a distal portion (120) and in the lateral direction (Y) over a determined width (l₁₀₀) between a first lateral edge (101) and a second lateral edge (102), the method comprising the weaving of first and second longitudinal sections (130, 150) each extending over the determined length of the fibrous texture along the longitudinal direction (X) and over a width from the first or second lateral edge (101, 102) smaller than the determined width of the fibrous texture along the lateral direction (Y), the first and second longitudinal sections (130, 150) each comprising warp strands (20) and weft strands (30) constituted by carbon fibers, the method further comprising the weaving of an intermediate section (140) present between the first and second longitudinal sections (130, 150), **characterized in that** at least a portion of the warp strands present in the intermediate section are hybrid warp strands (40) constituted by both carbon fiber filaments (41) and glass fiber filaments (42).

9. The method according to claim 8, wherein the intermediate section (140) comprises hybrid warp strands (40) having a size greater than the size of the warp strands (20) present in the first and second longitudinal sections (130, 150).

10. The method according to claim 8 or 9, wherein the hybrid warp strands (40) comprise between 10% and 90% of glass fiber filaments (41).
